# EUROPÄISCHE PATENTSCHRIFT

(11) **EP 1 056 621 B1**
(45) Veröffentlichungstag und Bekanntmachung des Hinweises auf die Patenterteilung: **10.07.2002**
(21) Anmeldenummer: 99911711.2
(22) Anmeldetag: 01.03.1999
(51) Int. Cl.: B60R 1/12, B60Q 1/26

(54) **AUSSENRÜCKSPIEGEL MIT BELEUCHTUNGSANORDNUNG**
EXTERIOR REARVIEW MIRROR WITH AN ILLUMINATING DEVICE
RETROVISEUR EXTERIEUR MUNI D'UN SYSTEME D'ECLAIRAGE

(30) Priorität: 27.02.1998 DE 19808139
(43) Veröffentlichungstag der Anmeldung: 06.12.2000
(73) Patentinhaber: Magna Auteca AG, 8160 Krottendorf (AT)
(72) Erfinder: MACHER, David, A-8570 Voitsberg (AT); ZORN, Heinz, A-8063 Eggersdorf (AT); ATHENSTAEDT, Wolfgang, A-8020 Graz (AT)
(74) Vertreter: Pfenning, Meinig & Partner GbR
(86) Internationale Anmeldenummer: EP9901247
(87) Internationale Veröffentlichungsnummer: WO9943516

(56) Entgegenhaltungen:
- EP-A- 0 820 900
- WO-A-97/38410
- DE-A- 19 538 770
- DE-A- 19 538 771
- DE-U- 29 804 489
- GB-A- 2 307 737
- US-A- 5 602 525
- PATENT ABSTRACTS OF JAPAN vol. 096, no. 011, 29. November 1996 & JP 08 192676 A (KOITO MFG CO LTD), 30. Juli 1996
- PATENT ABSTRACTS OF JAPAN vol. 097, no. 001, 31. Januar 1997 & JP 08 244524 A (KOITO MFG CO LTD), 24. September 1996
- PATENT ABSTRACTS OF JAPAN vol. 097, no. 001, 31. Januar 1997 & JP 08 238981 A (KOITO MFG CO LTD), 17. September 1996

## Beschreibung

Die vorliegende Erfindung bezieht sich auf einen Außenrückspiegel mit Beleuchtungsanordnung für ein Fahrzeug, insbesondere ein Kraftfahrzeug nach dem Oberbegriff des Hauptanspruchs.

In letzter Zeit sind Außenspiegel für Kraftfahrzeuge bekannt geworden (DE 29702746), die im Spiegelgehäuse eine Blinkleuchte aufweisen. Die Beleuchtungsanordnung ist dabei in der in Fahrtrichtung gerichteten Vorderseite des Gehäuses eingebaut und im Wesentlichen in Fahrtrichtung von vorne her erkennbar , jedoch strahlt sie auch zur Seite ab. Als Lichtquelle einer solchen Beleuchtungsanordnung wird eine Glühlampe verwendet, die jedoch eine erhebliche Wärme innerhalb des Spiegelgehäuses erzeugt und eine kurze Lebensdauer aufweist. Daher wurde versucht, als Lichtquellen eine oder mehrere Leuchtdioden zu verwenden, die aber eine nicht ausreichende Leuchtdichte des abstrahlenden Leuchtfeldes liefern.

Ein gattungsgemässer Aussenspiegel ist aus DE-A-195 38770 bekannt.

Der Erfindung liegt daher die Aufgabe zugrunde, einen Außenrückspiegel mit Beleuchtungsanordnung zur Bildung eines Leuchtfeldes zu schaffen, bei dem das Leuchtfeld eine hohe Leuchtdichte aufweist, wobei die Lichtquelle wenig Wärme entwickeln soll und wobei die Beleuchtungsanordnung einfach und kostengünstig herzustellen ist.

Diese Aufgabe wird erfindungsgemäß durch die kennzeichnenden Merkmale des Hauptanspruchs in Verbindung mit den Merkmalen des Oberbegriffs gelöst.

Als Lichtquelle wird eine mindestens in Teilbereichen langgestreckte Hochspannungs-Leuchtröhre verwendet, die besonders einfach gebogen werden und dreidimensional verformt werden kann, wobei sie wenig Wärme entwickelt und eine hohe Leuchtdichte ergibt.

Vorzugsweise ist die Beleuchtungsanordnung als Blinkelement oder Bremslichtelement ausgebildet und elektrisch mit den übrigen Blinkleuchten bzw. Bremsleuchten des Kraftfahrzeuges verbunden.

Die erfindungsgemäße Beleuchtungsanordnung zeichnet sich dadurch aus, daß sie entsprechend den gesetzlichen Bestimmungen Licht einer bestimmten Intensität bzw. Leuchtdichte, Farbe, Abstrahlcharakteristik und Blinkfrequenz mit hohem Wirkungsgrad abstrahlt und mit langer Lebensdauer und guter gestalterischer Formgebungsmöglichkeit kostengünstig hergestellt werden kann. Dabei werden beispielsweise dünne Leuchtstoffröhren mit einer innen angebrachten Leuchtstoffschicht entsprechend der gewünschten Formgebung zu dreidimensionalen Gebilden gebogen, wobei die Leuchtstoffröhren durch ein elektronisches Vorschaltgerät, das mit einer sogenannten Inverter-Elektronik versehen ist, angesteuert werden. Durch die Verwendung eines Lichtleitkörpers in Verbindung mit der mindestens einen Leuchtröhre werden Leuchtfelder mit hoher Homogenität und hoher Leuchtdichte erreicht.

Statt der Verwendung eines Lichtleitkörpers können auch Linsensystemelemente oder eine Kombination aus Lichtleiter und Linsensystemen verwendet werden. Ebenso können Streuoptikelemente und/oder Prismenelemente und/oder lichtleitende Elemente mit partieller totalreflektierender Beschichtung und/oder lichtleitende Elemente mit entsprechender Führung des Brechungsindexes gegeben und solcher Art als Einheit montiert werden. Auch jegliche Kombination der oben genannten Elemente wird hiermit erfindungswesentlich beansprucht.

Die vorliegende Erfindung hat den Vorteil, eine Beleuchtungsanordnung bzw. ein Leuchtelement zur Verfügung zu stellen, das den Anforderungen der Gestaltung von Automobilteilen bzw. Kraftfahrzeugspiegeln mit Leuchtelement größtmöglichen Spielraum zugesteht. Weiterhin genügt die erfindungsgemäße Beleuchtungsanordnung bzw. das Leuchtelement allen technischen und gesetzlichen Bestimmungen, insbesondere der abgestrahlten Helligkeit, der abgestrahlten Lichtfarbe, der Abstrahlrichtungscharakteristik und der kontinuierlichen, der helligkeitsgeregelten und/oder der blinkenden Abstrahlung und ermöglicht eine kostengünstige Herstellung mit leichter Montage und leichter Demontage unter Berücksichtigung moderner Recyclingstrategien sowie einen hohen Wirkungsgrad der Umwandlung von elektrischer Energie in Licht bei langer Lebensdauer des Gesamtsystems.

Erfindungsgemäß wurde festgestellt, daß Leuchtstoffröhren, insbesondere Kaltkathoden-Leuchtröhren sich sehr einfach zu dreidimensionalen Gebilden formen lassen, daß weiters derartige Leuchtstoffröhren mit den gewünschten Leuchtstoffschichten und den daraus resultierenden Farbemissionsspektren gefertigt werden können und daß mit einer entsprechenden Ansteuerelektronik in Form von sogenannten CCFL-Invertern (Cold cathode fluorescent lamp-Invertern) bzw. in Form von Schwingkreisen mit entsprechenden Transformatoren die typische Bordspannung von 12 Volt Gleichspannung in mehrere hundert Volt Wechselspannung mit bis zu 120 kHz Frequenz und bis zu 1500 Volt invertiert werden kann und derart auch ein Blinkbetrieb über typisch 2000 Stunden ohne Qualitätseinbußen mit einem hohen Wirkungsgrad realisiert werden kann. Besonders geeignet ist dabei die geringe Temperaturentwicklung der Leuchtröhren. Speziell dieser Punkt ist gegenüber konventionellen Glühlampen und/oder LEDs und/oder Halogenlampen ein wesentlicher Aspekt für die Konzeption der gesamten Beleuchtungsanordnung bzw. des gesamten Leuchtelementes, insbesondere in Zusammenhang mit dem Lichtleitkörper, da im Falle von geringer Temperatur kleine Bauhöhen und übliche thermoplastische Kunststoffe Verwendung finden können und der gestalterische Spielraum größer wird und insgesamt eine kostengünstig und einfach zu montierende Einheit gestaltet werden kann.

Gemäß dieser Erfindung ist es nun erstmals möglich, mittels einer einfach zu integrierenden Beleuchtungsanordnung bzw. eines entsprechenden Leuchtelementes Leuchtflächen mit einer sehr gleichmäßigen bzw. bewußt wählbaren Helligkeitsverteilung in außen liegende Elemente, wie einen Außenrückspiegel eines Kraftfahrzeuges zu integrieren und dabei beispielsweise die Lichtabstrahlung seitlich über eine z.B. 30 cm² große Fläche mit einer Leuchtdichte von z.B. größer 500 cd/m² und nach vorn, d.h. in Fahrtrichtung über eine Leuchtfläche von nur wenigen cm² mit einer Leuchtdichte von z.B. größer 1000 cd/m² mit einem sehr kleinen Licht-Streuwinkel zu ermöglichen, bzw. eine Lichtstärke im Bereich größer 0,6 bis größer 0,9 cd zu erreichen.

In einer bevorzugten Ausgestaltung weist die Leuchtstoffröhre eine innen liegende fluoreszierende Leuchtstoffbeschichtung auf, die eine Emission im orangenen Lichtspektrum, insbesondere im Wellenlängenbereich von 590 bis 594 nm bzw. einer Strahlungstemperatur von 2856 Kelvin bzw. mit den Farbkoordinaten (Normfarbwert-Anteilen) x = 0,595 bis 0,564 und y = 0,398 bis 0,429 und z =< 0,007 ermöglicht. Die fluoreszierende Leuchtstoffbeschichtung der Leuchtstoffröhre wird also entsprechend den geforderten Farbeffekten gestaltet und es kann neben der explizit genannten orangenen Farbemission mit entsprechenden Leuchtstoffen nahezu jede Farbvariante von blau bis grün bis gelb und rot erzielt und abgestrahlt werden.

Bei der gewünschten Farbemission ist auch der dreidimensional geformte Lichtleitkörper zu berücksichtigen, der eine das Leuchtfeld bildende Lichtabstrahlfläche und mindestens eine Lichteintrittsfläche besitzt, wobei die Leuchtröhre in unmittelbarer Nähe der Lichteintrittsfläche angeordnet ist. Der Lichtleitkörper besteht beispielsweise aus einem thermoplastisch geformten transparenten und/oder transluzenten Spritzgußteil aus beispielsweise Polymethylmetacrylat (PMMA), Polycarbonat (PC), Acrylnitril-Butadien-Styrol-Copolymer (ABS), Polyamiden (PA), Polystyrol (PS) und dergleichen bzw. aus einer Mischung derartiger thermoplastischen Kunststoffe und/oder aus herkömmlichem Glas.

Die Leuchtstoffröhre ist U-förmig dreidimensional gebogen, so daß die beiden elektrischen Anschlußkontakte an den offenen Enden nebeneinander zu liegen kommen und damit die elektrische Kontaktierung mittels eines Steckerteils mit Silikon- und/oder Polyurethanabdichtelementen erfolgen kann.

Eine besonders günstige Blinkansteuerung der Leuchtröhre liegt darin, daß der Inverter mittels Dimmer-Steuerung die Helligkeit auf und ab regelt und dabei die Zündspannung der Leuchtstoffröhre nicht unterschritten wird. Im Übrigen kann auch eine Anpassung der abgestrahlten Helligkeit an die Umgebungshelligkeit erfolgen und es ist darüber hinaus auch möglich, ein kontinuierliche Abstrahlung vorzusehen. Dies gilt insbesondere, wenn die Beleuchtungsanordnung nicht als Blinkleuchte dient, sondern zur Beleuchtung des Eingangsbereichs in das Kraftfahrzeug dient. In einer bevorzugten Ausführungsform werden die Elektroden zur Erleichterung des Zündens bei niedrigen Temperaturen permanent durch eine ständige Entladung vorgeheizt, so daß Elektroden und Gas leicht aufgeheizt sind, wodurch ein Durchschalten mit hoher Intensität ermöglicht wird.

Die Beleuchtungsanordnung bildet an der sichtbaren Außenseite des lichtleitenden dreidimensionalen Körpers ein Leuchtfeld aus, das in nicht leuchtendem Zustand die gewünschte Farbe zeigt, wie weiß, grau, transparent oder eine transluzent durchscheinende Wagenfarbe, wobei das Leuchtfeld auch semitransparent verspiegelt sein kann und das nur bei eingeschalteter Leuchtstoffröhre eine Lichtemission mit dem gewünschten Wellenlängenspektrum emitiert. Die Farbe kann durch eine zusätzliche Beschichtung auf der Frontseite der Beleuchtungsanordnung d.h. auf dem Leuchtfeld vorgesehen sein, die das Leuchtfeld im ausgeschalteten Zustand leicht getönt erscheinen läßt. Dies dient zur Kontrastverstärkung, wodurch das Leuchtfeld bei direkter Sonneneinstrahlung besser sichtbar ist.

Die dreidimensional geformte Leuchtstoffröhre ist im Lichtleitkörper mit Halteelementen derart befestigt, daß eine gute Dämpfung gegen Vibrationen und stoßartige Belastung gewährleistet ist und dennoch eine leichte Montage und Demontage durchgeführt werden kann. Hierbei werden bevorzugt Silikongummi- und/oder Polyurethan- und dergleichen Elemente Verwendung finden, wobei darüber hinaus auch entsprechende Quetschrippen und/oder Federelemente im dreidimensional geformten Lichtleitkörper verwendet werden können. Auf diese Weise wird eine kompakte Baueinheit gebildet, die in entsprechende Hohlräume in Gehäuse eingeklipst, eingeschnappt oder anderweitig befestigt wird.

In einer Weiterbildung ist vorgesehen, daß anstelle von nur einer dreidimensional geformten Leuchtstoffröhre zwei bzw. mehrere Leuchtstoffröhren zum Einsatz gelangen. Dabei können auch die innen liegenden Leuchtstoffbeschichtungen entsprechend den gewünschten Abstrahlungsfarbspektren bzw. Leuchtfarben unterschiedlich gewählt werden.

Anstelle des Lichtleitkörpers kann auch eine einfache Prismenabdeckung vorgesehen sein, hinter der sich die Leuchtstoffröhren befinden.

Zur Erhöhung der Lichtausbeute ist vorgesehen, daß die dreidimensional geformte Leuchtstoffröhre teilverspiegelte Außenseiten aufweist und derart nur in Richtung der Lichteinkopplung zum Lichtleitkörper Licht der gewünschten Wellenlängenverteilung ausstrahlt.

Darüber hinaus kann es vorgesehen sein, daß der dreidimensional geformte Lichtleitkörper mit Prismenflächen zur Lenkung des von der oder den Leuchtröhren ausgestrahlten Lichts zur Leuchtfläche aufweist oder partiell, d.h. an Flächen, die nicht Lichteinstrahlungsflächen und Lichtausstrahlungsflächen sind, verspiegelt ist und derart das eingekoppelte Licht der dreidimensional geformten Leuchtstoffröhre in fest vorgegebenen Oberflächenbereichen mit der gewünschten Abstrahlcharakteristik und Intensitätsverteilung ausstrahlt. Der Lichtleitkörper kann auch zusammen mit der mindestens einen Leuchtröhre von einer mit einer Spiegelbeschichtung versehenen Kappe abgedeckt sein, die dann Bestandteil der Baueinheit ist.

Ausführungsbeispiele der Erfindung sind in der Zeichnung dargestellt und werden in der nachfolgenden Beschreibung näher erläutert. Die in den Zeichnungen offenbarten Merkmale sind zur erfindungswesentlichen Offenbarung mitzurechnen. Es zeigen:
- Fig. 1: eine schematische Darstellung eines Außenrückspiegels mit erfindungsgemäßer Beleuchtungsanordnung in der Draufsicht,
- Fig. 2: den Außenrückspiegel mit der Beleuchtungsanordnung bzw. dem Leuchtelement nach Fig. 1 in der Vorderansicht, d.h. entgegen der Fahrtrichtung gesehen,
- Fig. 3: ein Ausführungsbeispiels eines Teils der Beleuchtungsanordnung nach Fig. 1 und Fig. 2 in der Stirnansicht,
- Fig. 4: einen Schnitt durch die Beleuchtungsanordnung bzw. das Leuchtelement,
- Fig. 5: einen Schnitt durch die Beleuchtungsanordnung bzw. das Leuchtelement nach Fig. 4 entsprechend der Schnittlinie V,
- Fig. 6: einen Schnitt entsprechend Fig. 5 durch ein weiteres Ausführungsbeispiel eines verwendeten Lichtleitkörpers,
- Fig. 7: eine Draufsicht auf die Einbausituation des Außenrückspiegels mit Beleuchtungsanordnung an der rechten Seiten eines Kraftfahrzeuges,
- Fig. 8: eine Seitenansicht auf die rechte Seite eines Kraftfahrzeuges.

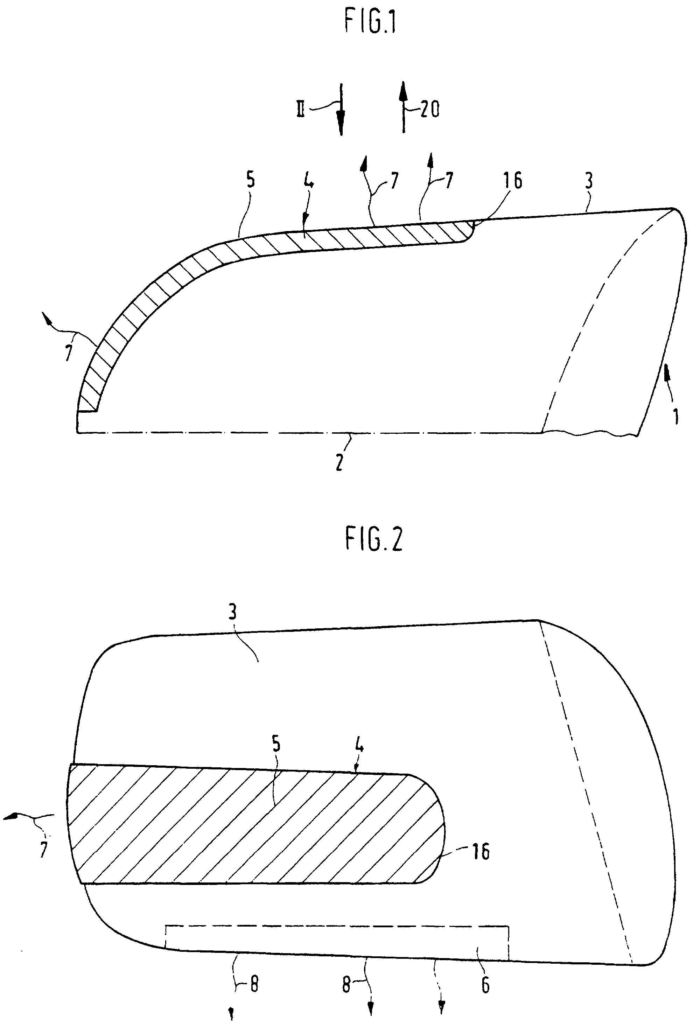

In Fig. 1 ist die Einbausituation eines dreidimensional gebogenen Leuchtelementes 4, das Bestandteil einer Beleuchtungsanordnung ist, in einen Außenrückspiegel 1 dargestellt. Der Rückspiegel 1 hat hierbei in üblicher Weise eine nach hinten, d.h. entgegen die Fahrtrichtung gerichtete Spiegelseite 2 und in seiner Vorderseite 3, d.h. in die Fahrtrichtung gerichtete Seite ist das Leuchtelement 4 eingebaut, welches in den Pfeilrichtungen 7 Licht nach vorne und zur Seite hin emittiert. Das Leuchtelement bildet ein von außen sichtbares Leuchtfeld 5 aus, welches im nichtleuchtenden Zustand beispielsweise weiß, transparent oder transluszent in der Farbe des Kraftfahrzeuges aussehen kann.

In Fig. 2 ist der Außenrückspiegel 1 von vorn dargestellt, wobei erkennbar ist, daß das Leuchtfeld 5 sich etwa horizontal und etwa rechteckförmig mit abgerundeten Kanten bis über die äußere Stirnseite des Rückspiegels 1 hinaus erstreckt und demzufolge auch seitlich sichtbar ist und abstrahlt. Das dargestellte Leuchtelement 4 dient im vorliegenden Fall als Blinkoder Bremslichtelement.

In gestrichelter Darstellung ist in Fig. 2 noch angedeutet, daß ein weiteres Leuchtelement 6 vorhanden sein kann, welches an der Unterseite des Rückspiegels 1 eingebaut ist und vorzugsweise nach unten abstrahlt. Dieses Leuchtelement kann lichtleitend mit dem ersten Leuchtelement 4 gekoppelt sein, wobei es jedoch auch völlig getrennt von dem ersten Leuchtelement vorgesehen sein kann und als Einstiegsleuchte verwendet werden kann. Dabei wird während des Einstiegsvorganges die Bodenfläche in Pfeilrichtung 8 vor der Tür des Kraftfahrzeuges beleuchtet.

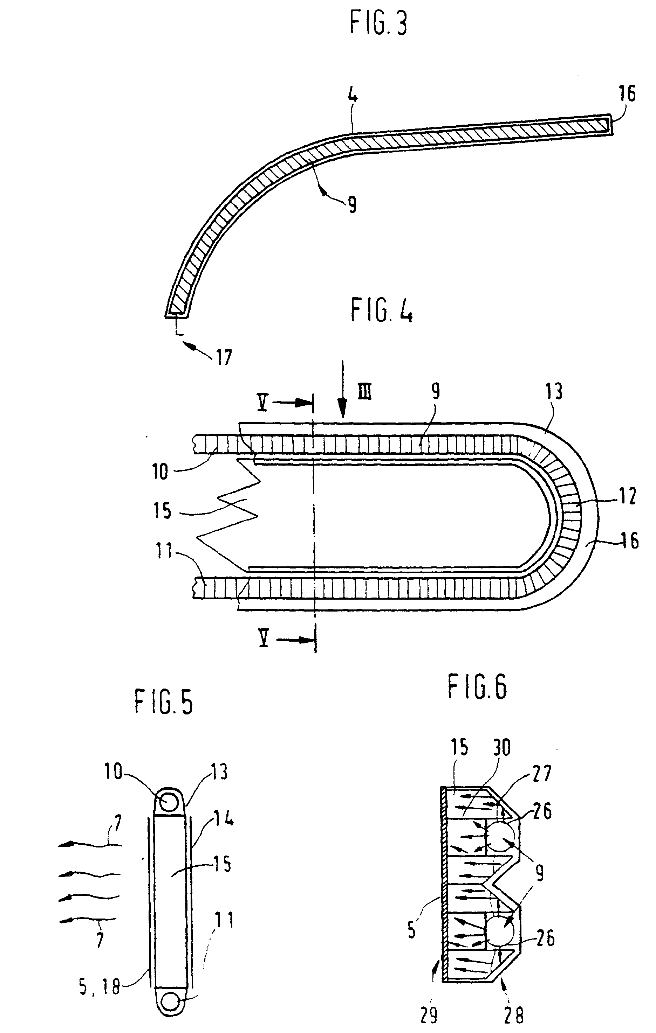

Das Leuchtelement 4 besteht im dargestellten Ausführungsbeispiel im Wesentlichen aus einer Hochspannungs-Entladungslampe, einer sogenannten Leuchtröhre, die im vorliegenden Fall mit einer innen liegenden fluoreszierenden Leuchtstoffbeschichtung versehen ist und somit als Leuchtstoffröhre ausgebildet ist, und aus einem Lichtleitkörper, die genau in den Fign. 3 bis 5 dargestellt sind. Die Leuchtstoffröhre 9 ist U-förmig gebogen und entsprechend Fig. 3 der Kontur des Gehäuses des Außenspiegels 1 als gesamtes "U" angepaßt. Sie weist dabei zwei zueinander parallele und im Abstand zueinander angeordnete Röhrenteile 10, 11 auf, die mit einem diese beiden Teile verbindenden gekrümmten Röhrenteil 12 das U-Profil bilden. Das Röhrenteil 12 bildet die Stirnseite des Leuchtelementes 4, die etwa vertikal auf der kraftfahrzeug-nahen Seite verläuft, d.h. dem Kraftfahrzeug zugewandt ist. Die elektrischen Anschlüsse der Leuchtstoffröhre 9, die mit einer nicht dargestellten elektronischen Ansteuereinheit verbunden sind, wobei die Ansteuerelektronik zusammen mit dem Leuchtelement 4 die Beleuchtungsanordnung bilden, sind an einer Anschlußseite 17 zusammengefaßt, um eine einfache Sockelung zu erreichen.

Zur Weiterleitung des von der Leuchtstoffröhre 9 erzeugten Lichts ist ein Lichtleitkörper vorgesehen, der zwischen den Röhrenteilen 10 bis 12 angeordnet ist und im Ausführungsbeispiel plattenförmig ausgebildet ist und aus einem Kunststoffmaterial besteht. Dabei bilden die Stirnkanten, d.h. die schmalen Umfangsflächen des Lichtleitkörpers die Lichteintrittsflächen, denen die Leuchtstoffröhre 9 gegenübersteht. Das Leuchtfeld 5 wird von der Lichtaustrittsfläche des Lichtleitkörpers 15 gebildet, wobei die der Lichtaustrittsfläche gegenüberliegende Fläche mit einer im Wesentlichen vollständig reflektierenden Beschichtung, vorzugsweise einer Spiegelschicht 14 versehen ist, die das auftreffende Licht wieder vollständig in das Innere des Lichtleitkörpers 15 reflektiert. Die Leuchtstoffröhre ist gleichfalls von einer reflektierenden Schicht 13 umgeben, die das nicht auf die Lichteintrittskante von der Leuchtstoffröhre 9 ausgesendete Licht auf die Lichteintrittskante reflektiert. Diese Reflektorschicht 13 kann als Folie aber auch als die Leuchtstoffröhre umgebende Kappe ausgebildet sein, die gleichzeitig eine Halterung für die gesamte Anordnung bildet. Auch kann die Leuchtstoffröhre selbstreflektierend teilbeschichtet sein.

In Fig. 5 ist die Lichtabstrahlfläche des Lichtleitkörpers mit einer Beschichtung 18 versehen, die als Diffusorfolie ausgebildet sein kann oder eine Aufrauhung, Kaschierung oder Struktur bildet. Mit der Beschichtung kann eine Vergleichmäßigung der Lichtverteilung erzielt werden oder sie dient zur Kontrasterhöhung.

Wie schon oben ausgeführt, ist die Leuchtröhre 9 mit der nicht dargestellten elektronischen Ansteuereinheit verbunden, wobei die Ansteuerung bei dem Leuchtelement 4 entsprechend der Blinkleuchte intermittierend ist. Bei einer Verwendung entsprechend dem Leuchtelement 6 wird die entsprechende Leuchtstoffröhre im Dauerbetrieb, d.h. kontinuierlich angesteuert.

In Fig. 6 ist ein weiteres Ausführungsbeispiel des Leuchtelementes 4 dargestellt, wobei der Lichtleitkörper 15 prismatisch dargestellt ist. In den Lichtleitkörper sind in der der Abstrahlfläche 5 entgegengesetzten Fläche Vertiefungen 26, hier in Rechteckform eingearbeitet, in die die Leuchtstoffröhre 9 eingesetzt ist. Die Leuchtstoffröhre strahlt somit in jeder Vertiefung in drei Eintrittsflächen und damit die in die seitlichen Lichteintrittsflächen einstrahlende Strahlung zur Lichtaustrittsfläche gelenkt wird, ist die dem Leuchtfeld gegenüberliegende Fläche, d.h. die zum Gehäuse gerichtete Fläche mit Schrägen 27 versehen, die das Licht zur Lichtabstrahlfläche lenken. Die Schrägen 27 können wiederum verspiegelt sein, jedoch kann insgesamt der Lichtleitkörper von einer innen verspiegelten Kappe 28 umgeben werden, durch die nur das Leuchtfeld 5 frei bleibt. Auch hier ist wiederum eine den Kontrast verbessernde Beschichtung 29 vorgesehen.

Der Lichtleitkörper kann aus einem Kunststoffteil bestehen, er kann jedoch auch aus mehreren Kunststoffelementen zusammengesetzt sein. In diesem Fall können an den Grenzflächen zwischen den einzelnen Teilen zusätzliche Verspiegelungen 30 vorgesehen sein, die das Licht reflektieren und in gewünschte Richtungen lenkt.

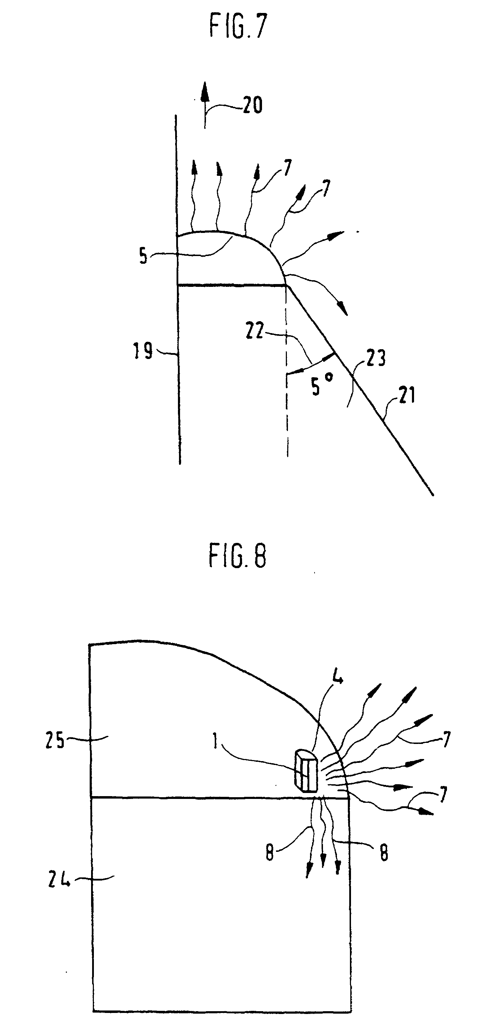

In Fig. 7 ist die Anordnung eines Kraftfahrzeugspiegels 1 am Auto dargestellt, wobei die Fahrzeugseitenkante mit 19 bezeichnet ist. Mit 7 ist die Lichtabstrahlung dargestellt und es ist zu erkennen, daß außerhalb eines nach hinten gerichteten Sektors 26 eine Lichtabstrahlung auch nach hinten geschieht. Der Sektor 23 wird durch einen Winkel 22 von etwa 5° zwischen einer Linie 21 und einer Linie definiert, die etwa parallel zur Fahrzeuglängsachse, d.h. parallel zur Fahrzeugseitenkante 19 verläuft. Die Lichtabstrahlung in Pfeilrichtung 7 erfolgt daher nicht nur in Fahrtrichtung 20, sondern auch seitlich davon.

Fig. 8 zeigt eine Fahrzeugtür 24 in Draufsicht. Neben der Lichtabstrahlung zur Seite, im Sinne der Fig. 7, ist auch eine Lichtabstrahlung in Pfeilrichtung schräg nach oben vorgesehen. In Verbindung mit dem weiteren Leuchtelement 7 kann auch fallweise eine Lichtabstrahlung in Pfeilrichtung 8 nach unten erfolgen, wenn das Leuchtelement 6 als Blinkelement ausgebildet ist.

Der Lichtleitkörper 15 kann auch als prismatische Abdeckung ausgebildet sein, wobei mehrere Leuchtröhren bzw. mehrfach gebogene Röhrenteile hinter der Abdekkung angeordnet sein können.

## Patentansprüche

1. Außenrückspiegel mit Beleuchtungsanordnung für ein Fahrzeug, die im Gehäuse des Rückspiegels derart angeordnet ist, daß am Gehäuse mindestens ein in Fahrtrichtung nach vorn gerichtetes Leuchtfeld gebildet wird, mit mindestens einer im Gehäuse angeordneten Lichtquelle und einer die mindestens eine Lichtquelle abdeckenden lichtdurchlässigen Abdeckung,
**dadurch gekennzeichnet, daß** die Abdeckung als Lichtleitkörper (15) ausgebildet ist, der mindestens eine Lichteintrittsfläche und eine das Leuchtfeld (5) bildende Lichtaustrittsfläche aufweist, wobei die dem Gehäuse zugewandten Flächenbereiche des Lichtleitkörpers (15) zumindest teilweise reflektierend oder verspiegelt ausgebildet sind und die mindestens eine Lichtquelle als Hochspannungs-Leuchtröhre (9) ausgebildet ist, die in unmittelbarer Nähe der Lichteintrittsfläche angeordnet ist, wobei die mindestens eine Leuchtröhre (9) und der Lichtleitkörper (15) dreidimensional verformt sind.

2. Außenrückspiegel nach Anspruch 1, **dadurch gekennzeichnet, daß** die Leuchtröhre (9) mit Kaltkathoden versehen ist.

3. Außenrückspiegel nach Anspruch 1 oder Anspruch 2, **dadurch gekennzeichnet, daß** die Leuchtröhre (9) auf ihrer Innenwand mit einer fluoreszierenden Leuchtstoffschicht versehen ist und somit als Leuchtstoffröhre ausgebildet ist.

4. Außenrückspiegel nach einem der Ansprüche 1 bis 3, **dadurch gekennzeichnet, daß** mindestens zwei parallel angeordnete Leuchtröhren (9) und/oder Leuchtröhrenteile (10, 11) vorgesehen sind.

5. Außenrückspiegel nach einem der Ansprüche 1 bis 4, **dadurch gekennzeichnet, daß** die Leuchtröhre (9) U-förmig ausgebildet ist, wobei an den Enden die elektrischen Anschlüsse vorgesehen sind.

6. Außenrückspiegel nach einem der Ansprüche 1 bis 5, **dadurch gekennzeichnet, daß** der Lichtleitkörper (15) als Platte ausgebildet ist, wobei die schmalen Stirnflächen Lichteintrittsflächen bilden.

7. Außenrückspiegel nach einem der Ansprüche 1 bis 5, **dadurch gekennzeichnet, daß** in der dem Gehäuse zugewandten Fläche des Lichtleitkörpers (15) eine oder mehrere Vertiefungen (26) zur Aufnahme von einer oder mehreren Leuchtröhren (9) oder Leuchtröhrenteilen (10, 11) vorgesehen sind und daß die dem Gehäuse zugewandte Fläche schräge Flächenteile (27) aufweist, derart, daß das aus der Leuchtröhre seitlich austretende Licht zum Leichtfeld hin reflektiert wird.

8. Außenrückspiegel nach einem der Ansprüche 1 bis 7, **dadurch gekennzeichnet, daß** die mindestens eine Leuchtröhre (9) teilverspiegelt oder mit einem Reflektor (13) versehen ist, derart, daß das ausgestrahlte und reflektierte Licht in den Lichtleitkörper (15) gelenkt wird.

9. Außenrückspiegel nach einem der Ansprüche 1 bis 8, **dadurch gekennzeichnet, daß** die mindestens eine Leuchtröhre (9) mit dem Lichtleitkörper (15) über Halteelemente verbunden ist und Leuchtröhre und Lichtleitkörper eine Baueinheit bilden.

10. Außenrückspiegel nach einem der Ansprüche 1 bis 9, **dadurch gekennzeichnet, daß** die mindestens eine Leuchtröhre (9) mit einer Ansteuereinheit verbunden ist, die ein elektronisches Vorschaltgerät, insbesondere einen Inverter aufweist, daß eine zwölf Volt Bord-Gleichspannung in eine Hochspannung von einigen hundert Volt bis 1200 Volt mit einer Frequenz von etwa 10 bis 120 kHz wandelt.

11. Außenrückspiegel nach einem der Ansprüche 1 bis 10, **dadurch gekennzeichnet, daß** das Leuchtfeld (5) für eine seitliche flächenhafte Lichtabstrahlung eine Leuchtdichte im Bereich größer 500 cd/m² und für eine Abstrahlung in Fahrtrichtung in einem einstellbaren Winkelbereich eine Leuchtdichte größer 1000 cd/m² aufweist.

12. Außenrückspiegel nach einem der Ansprüche 1 bis 11, **dadurch gekennzeichnet, daß** die fluoreszierende Leuchtstoffschicht abhängig von dem gewünschten Emissionsspektrum des Leuchtfeldes wählbar ist und daß für eine Verwendung als Blinkleuchte der Leuchtstoff eine Emission im Wellenlängenbereich von 590 bis 594 nm bzw. mit einer Strahlungstemperatur von 2856 Kelvin bzw. mit den Farbkomponenten x = 0,595 bis 0,564 und y = 0,398 bis 0,429 sowie z< = 0,007 aufweist.

13. Außenrückspiegel nach einem der Ansprüche 1 bis 12, **dadurch gekennzeichnet, daß** die Ansteuerung der Leuchtröhre als Blinkleuchte mittels Dimmersteuerung die Helligkeit auf und ab regelt und dabei die Zündspannung der Leuchtstoffröhre (9) nicht unterschritten wird und daß eine Anpassung der abgestrahlten Helligkeit an die Umgebungshelligkeit erfolgt.

14. Außenrückspiegel nach einem der Ansprüche 1 bis 13, **dadurch gekennzeichnet, daß** für eine Vorheizung der Elektroden bzw. Kaltkathoden die Steuerung derart ausgebildet ist, daß eine ständige Entladung an den Elektroden stattfindet.

15. Außenrückspiegel nach einem der Ansprüche 1 bis 14, **dadurch gekennzeichnet, daß** das Leuchtfeld eine Beschichtung zur Kontraststeigerung aufweist.

## Claims

1. Exterior rear-view mirror with a lighting arrangement for a vehicle, which is disposed in the housing of the rear-view mirror in such a way that at least one luminous field oriented forwards in the direction of travel is formed on the housing, with at least one light source arranged in the housing and a transparent cover covering the at least one light source, **characterised in that** the cover is configured as a light-conducting body (15) which has at least one light entry surface and one light exit surface forming the luminous field (5), the surface regions of the light-conducting body (15) which face the housing being configured at least partially reflective or mirror-coated and the at least one light source is configured as a high-voltage tubular lamp (9) being disposed in the immediate proximity of the light entry surface, the at least one tubular lamp (9) and light-conducting body (15) being deformed three-dimensionally.

2. Exterior rear-view mirror according to claim 1, **characterised in that** the tubular lamp (9) is provided with cold cathodes.

3. Exterior rear-view mirror according to claim 1 or claim 2, **characterised in that** the tubular lamp (9) is provided on its inner wall with a layer of a fluorescent substance and is thus configured as a fluorescent tube.

4. Exterior rear-view mirror according to one of claims 1 - 3, **characterised in that** at least two tubular lamps (9) and/or tubular lamp portions (10, 11) are provided, disposed parallel.

5. Exterior rear-view mirror according to one of claims 1 - 4, **characterised in that** the tubular lamp (9) is configured in a U-shape, the electrical connections being provided at the ends.

6. Exterior rear-view mirror according to one of claims 1 to 5, **characterised in that** the light-conducting body (15) is configured as a plate, the narrow end surfaces forming light entry surfaces.

7. Exterior rear-view mirror according to one of claims 1 to 5, **characterised in that**, in the surface of the light-conducting body (15) facing the housing, one or more depressions (26) are provided to receive one or more tubular lamps (9) or tubular lamp portions (10, 11), and **in that** the surface facing the housing has sloping part-surfaces (27), in such a way that the light emerging at the side from the tubular lamp is reflected towards the luminous field.

8. .Exterior rear-view mirror according to one of claims 1 - 9, **characterised in that** the at least one tubular lamp (9) is partially mirror-coated or provided with a reflector (13), in such a way that the emitted and reflected light is deflected into the light-conducting body (15).

9. Exterior rear-view mirror according to one of claims 1 - 8, **characterised in that** the at least one tubular lamp (9) is connected to the light-conducting body (15) via mounting elements and the tubular lamp and light-conducting body form a constructional unit.

10. Exterior rear-view mirror according to one of claims 1 - 9, **characterised in that** the at least one tubular lamp (9) is connected to a triggering unit, which has an electronic lamp ballast, especially an inverter, which converts a 12 volt vehicle d.c. voltage into a high voltage of several hundred volts to 1200 volts with a frequency of roughly 10 to 120 kHz.

11. Exterior rear-view mirror according to one of claims 1 - 10, **characterised in that** the luminous field (5) for a lateral area light radiation has a luminance in the region of more than 50 cd/m² and, for radiation in the direction of travel in an adjustable angle range, a luminance of more than 1000 cd/m².

12. Exterior rear-view mirror according to one of 41 claims 1 - 11, **characterised in that** the layer of fluorescent substance may be selected in dependence on the desired emission spectrum of the luminous field and **in that**, for use as an indicator light, the fluorescent substance has an emission in the wavelength range of 590 - 594 nm or with a radiation temperature of 2856 kelvin or with the colour components x = 0.595 - 0.564 and y = 0.398 - 0.429 as well as z< = 0.007.

13. Exterior rear-view mirror according to one of claims 1 - 12, **characterised in that** the triggering of the tubular lamp as an indicator light regulates the brightness up and down by means of a dimmer control system and that there is no drop below the firing voltage of the fluorescent tube (9) and **in that** adaptation of the radiated brightness to the ambient brightness occurs.

14. Exterior rear-view mirror according to one. of claims 1 - 13, **characterised in that**, to preheat the electrodes or cold cathodes, the control system is configured in such a way that permanent discharge takes place at the electrodes.

15. Exterior rear-view mirror according to one of claims 1 - 14, **characterised in that** the luminous field has a coating to heighten the contrast.

## Revendications

1. Rétroviseur extérieur muni d'un système d'éclairage pour véhicule, qui est disposé dans le logement du rétroviseur de façon telle qu'est formé au niveau du logement au moins un champ lumineux orienté vers l'avant dans le sens de marche, comportant au moins une source lumineuse disposée dans le logement et un couvercle translucide recouvrant la source lumineuse au moins,
**caractérisé en ce que** le couvercle est conçu en tant que corps guide d'onde optique (15) qui présente au moins une surface d'entrée de la lumière et une surface de sortie de la lumière formant le champ lumineux (5), les zones de surface du corps de guide d'onde optique (15) orientées vers le logement étant conçues au moins partiellement de façon réfléchissante ou argentée et la source lumineuse au moins étant conçue en tant que tube luminescent haute tension (9) qui est disposé à proximité immédiate de la surface d'entrée de lumière, le tube luminescent au moins (9) et le corps guide d'onde optique (15) étant façonnés en trois dimensions.

2. Rétroviseur extérieur selon la revendication 1, **caractérisé en ce que** le tube luminescent (9) est équipé de cathodes froides.

3. Rétroviseur extérieur selon la revendication 1 ou la revendication 2, **caractérisé en ce que** le tube luminescent (9) est pourvu sur sa paroi interne d'une couche de substance luminescente fluorescente et est par conséquent conçu en tant que lampe fluorescente.

4. Rétroviseur extérieur selon l'une des revendications 1 à 3, **caractérisé en ce qu'**au moins deux tubes luminescents disposés parallèlement (9) et/ou parties de tubes luminescents (10, 11) sont prévus.

5. Rétroviseur extérieur selon l'une des revendications 1 à 4, **caractérisé en ce que** les tubes luminescents (9) sont conçus en forme de U, les connexions électriques étant prévues à leurs extrémités.

6. Rétroviseur extérieur selon l'une des revendications 1 à 5, **caractérisé en ce que** le corps guide d'onde optique (15) est conçu en tant que plaque, les surfaces avant étroites formant les surfaces d'entrée de la lumière.

7. Rétroviseur extérieur selon l'une des revendications 1 à 5, **caractérisé en ce que** dans la surface orientée vers le logement du corps guide d'onde optique (15) sont prévus un ou plusieurs renfoncements (26) pour loger un ou plusieurs tubes luminescents (9) ou parties de tubes luminescents (10, 11), et **en ce que** la surface orientée vers le logement présente des parties de surface obliques (27), de façon telle que la lumière sortant latéralement des tubes luminescents est réfléchie vers le champ lumineux.

8. Rétroviseur extérieur selon l'une des revendications 1 à 7, **caractérisé en ce que** le tube luminescent au moins (9) est partiellement argenté ou est pourvu d'un réflecteur (13) de façon telle que la lumière irradiée et réfléchie est dirigée dans le corps guide d'onde optique (15).

9. Rétroviseur extérieur selon l'une des revendications 1 à 8, **caractérisé en ce que** le tube luminescent au moins (9) est relié au corps guide d'onde optique (15) par des éléments de retenue et **en ce que** le tube luminescent et le corps guide d'onde optique forment un module.

10. Rétroviseur extérieur selon l'une des revendications 1 à 9, **caractérisé en ce que** le tube luminescent (9) au moins est relié à une unité de commande qui présente un ballast électronique, en particulier un inverseur, **en ce qu'**une tension de bord continue de 12 volts est convertie en une haute tension de quelques centaines de volts à 1 200 volts avec une fréquence d'environ 10 à 120 kHz.

11. Rétroviseur extérieur selon l'une des revendications 1 à 10, **caractérisé en ce que** le champ lumineux (5) présente, pour un rayonnement lumineux plan latéral, une luminance comprise dans la gamme supérieure à 500 cd/m², et pour un rayonnement dans le sens de marche, selon une gamme angulaire réglable, une luminance supérieure à 1 000 cd/m².

12. Rétroviseur extérieur selon l'une des revendications 1 à 11, **caractérisé en ce que** la couche de substance luminescente fluorescente peut être sélectionnée en fonction du spectre d'émission souhaité du champ lumineux, et **en ce que**, pour une utilisation en tant que clignotant, la substance lumineuse présente une émission dans la gamme des longueurs d'onde de 590 à 594 nm ou avec une température de radiation de 2 856 kelvin ou avec les coordonnées chromatiques x = 0,595 à 0,564 et y = 0,398 à 0,429, ainsi que z ≤ 0,007.

13. Rétroviseur extérieur selon l'une des revendications 1 à 12, **caractérisé en ce que** la commande du tube luminescent en tant que clignotant augmente ou réduit la luminosité au moyen d'une commande de variateur de lumière et qu'à cet égard, on ne passe pas sous la tension d'allumage du tube luminescent (9), et **en ce qu'**il se produit une adaptation de la luminosité émise à la luminosité environnante.

14. Rétroviseur extérieur selon l'une des revendications 1 à 13, **caractérisé en ce que**, pour un préchauffage des électrodes ou des cathodes froides, la commande est conçue de façon telle qu'il se produit une décharge permanente au niveau des électrodes.

15. Rétroviseur extérieur selon l'une des revendications 1 à 14, **caractérisé en ce que** le champ lumineux présente un revêtement destiné à augmenter le contraste.
